# EUROPÄISCHE PATENTANMELDUNG

(11) **EP 1 965 578 A1**
(43) Veröffentlichungstag der Anmeldung: **03.09.2008**
(21) Anmeldenummer: 07004313.8
(22) Anmeldetag: 02.03.2007
(51) Int. Cl.: H04M 3/54

(54) **Verfahren zur Weiterleitung eines Verbindungswunsches sowie Telekommunikationsanlage**

(71) Anmelder: Avaya GmbH & Co. KG, 60326 Frankfurt am Main (DE)
(72) Erfinder: Fischer, Martin, 65527 Niedernhausen (DE)
(74) Vertreter: Walkenhorst, Andreas

(57) **Zusammenfassung**

Ein Verfahren zur Weiterleitung eines von einem einem anrufenden Teilnehmer zugeordneten ersten Telekommunikationsgerät (6) ausgehenden Verbindungswunsches von einem zweiten, einem gerufenen aber abwesenden Teilnehmer zugeordneten Telekommunikationsgerät (6) auf ein drittes Telekommunikationsgerät (6) soll den Interessen des anrufenden Teilnehmers in besonders weitgehendem Umfang Rechnung tragen. Dazu ist erfindungsgemäß dem anrufenden Teilnehmer eine Möglichkeit zur Auswahl des dritten Telekommunikationsgerätes (6) angeboten.

## Beschreibung

Die Erfindung bezieht sich auf ein Verfahren zur Weiterleitung eines von einem anrufenden Teilnehmer zugeordneten ersten Telekommunikationsgerät ausgehenden Verbindungswunsches von einem zweiten, einem gerufen, aber abwesenden Teilnehmer zugeordneten Telekommunikationsgerät auf ein drittes Telekommunikationsgerät. Sie betrifft weiterhin eine Telekommunikationsanlage zur Durchführung des Verfahrens.

Derartige Konzepte zur Anrufweiterleitung für den Fall, dass ein angerufener Teilnehmer an seinem Telekommunikationsgerät nicht verfügbar ist und den von einem eingehenden Anruf ausgelösten Verbindungswunsch somit nicht entgegennehmen kann, sind gerade in größeren Telekommunikationsanlagen oder Telekommunikationsnetzen weit verbreitet. Vielfach kommt dabei eine automatische Rufweiterleitung oder -umleitung zum Einsatz, bei der ein Teilnehmer für den Fall, dass er an seinem Arbeitsplatz oder über das ihm zugeordnete Telekommunikationsgerät vorübergehend oder auch für längere Zeit nicht erreichbar ist, eine feste Rufnummer für ein weiteres Telekommunikationsgerät hinterlegt, auf das die eingehenden Anrufe dann umgeleitet werden. Stattdessen kann eine derartige automatische Anrufweiterleitung auch auf einen Anrufbeantworter umgeleitet werden, der auf Wunsch des Anrufenden eine Sprachnachricht für den derzeit nicht erreichbaren Teilnehmer aufzeichnet.

Alternativ oder zusätzlich zu derartigen automatischen oder unbedingten Anrufweiterleitungen können auch so genannte bedingte Anrufweiterleitungen zum Einsatz kommen, bei denen ein für ein Telekommunikationsgerät eingehender Verbindungswunsch auf ein alternatives Telekommunikationsgerät umgeleitet wird, wenn eine vorgegebene Bedingung erfüllt ist. Dabei kann es sich beispielsweise um eine Anrufweiterleitung für den Fall handeln, dass das angewählte Telekommunikationsgerät zur Zeit gerade besetzt ist. Für derartige Fälle wird von den Nutzern der angerufenen Telekommunikationsgeräte üblicherweise eine Nummer fest hinterlegt, auf die eingehende Anrufe in derartigen Fällen umgeleitet werden sollen. Ein derartiges Konzept kommt insbesondere auch für Mobilfunk-Endgeräte in Betracht, bei denen die Weiterleitung eines eingehenden Anrufs, beispielsweise zu einem Anrufbeantworter, auch für den Fall vorgesehen und voreingestellt sein kann, dass ein Nutzer des Mobilfunk-Endgeräts wegen mangelnder Verbindung durch das Mobilfunknetz oder aus sonstigen Gründen nicht erreichbar ist oder sein Mobilfunkgerät abgeschaltet hat.

Für den Anrufer ergibt sich bei derartigen Systemen somit durchweg die Situation, dass er für den Fall, dass der gewünschte Teilnehmer nicht erreichbar oder nicht verfügbar ist, mit einem Anrufbeantwortersystem oder mit einem fest vorgegebenen Ausweichgerät verbunden wird. Gerade bei Telekommunikationsanlagen in größeren Organisationen, beispielsweise Behörden, größeren Unternehmen oder dergleichen, kann dies aber möglicherweise unzweckmäßig und nicht interessengerecht sein. Gerade in derartigen, vergleichsweise großen Organisationen, die mit einer Telekommunikationsanlage mit einer Vielzahl von Endgeräten bestückt sind, ist es nämlich denkbar, dass der Anrufer den ursprünglich angerufenen Teilnehmer nicht wegen dessen unmittelbarer Person oder wegen einer persönlichen Beziehung, sondern vielmehr aufgrund einer Sachfrage, einer sachlichen Zuständigkeit oder einer sachlichen Kompetenz erreichen möchte. Falls der angerufene Teilnehmer gerade nicht verfügbar sein sollte, so ist in einem derartigen Fall zwar möglich, dass der Anrufer den Verbindungswunsch beendet und versucht, in einem neuen Anruf einen anderen Gesprächsteilnehmer mit gleicher oder ähnlicher Sachkompetenz zu erreichen. Dies setzt aber voraus, dass der Anrufer über ausreichende Informationen über die Struktur der angerufenen Organisation, Behörde oder Firma verfügt, um einen geeigneten alternativen Gesprächsteilnehmer auszuwählen. Diese Informationen liegen dem Anrufer üblicherweise gerade bei größeren Organisationen nicht vor.

Der Erfindung liegt daher die Aufgabe zugrunde, ein Verfahren zur Anrufweiterleitung der oben genannten Art anzugeben, mit dem den Interessen des anrufenden Teilnehmers in besonders weitgehendem Umfang Rechnung getragen werden kann. Des Weiteren soll eine zur Durchführung des Verfahrens besonders geeignete Telekommunikationsanlage angegeben werden.

Bezüglich des Verfahrens wird diese Aufgabe erfindungsgemäß gelöst, indem dem anrufenden Teilnehmer für den Fall, dass der ursprünglich angewählte und angerufene Teilnehmer nicht verfügbar oder nicht erreichbar sein sollte, eine Möglichkeit zur Auswahl des dritten Telekommunikationsgerätes angeboten wird, auf das der Verbindungswunsch umgeleitet werden soll.

Die Erfindung geht dabei von der Erkenntnis aus, dass gerade bei einer sachbezogenen Anfrage oder dergleichen des anrufenden Teilnehmers, bei der weniger die Person des ursprünglich angerufenen Teilnehmers, sondern vielmehr dessen sachliche Kompetenz, räumliche Positionierung oder dergleichen im Vordergrund steht, eine an den Interessen des Anrufers orientierte Weiterleitung zu anderen Personen, die hinsichtlich ihrer sachlichen Kompetenz, räumlichen Aufstellung oder dergleichen in Beziehung zum ursprünglich angerufenen Teilnehmer stehen, erfolgen sollte. Im Hinblick darauf, dass Informationen über derartige, aufgrund ihrer sachlichen Kompetenz oder auch aufgrund anderer Kriterien geeignete Personen, die statt der ursprünglich angewählten Person zur Bearbeitung der Anfrage des Anrufers in der Lage wären, diesem üblicherweise nicht vorliegen, sollte für eine an den Interessen des Anrufers orientierte Anrufweiterleitung dieser zunächst über die zur Verfügung stehenden Möglichkeiten zur Weiterleitung informiert werden. Auf dieser Grundlage ist eine interessengerechte Anrufweiterleitung ermöglicht, indem dem Anrufer die Möglichkeit eingeräumt wird, auf der Grundlage derartiger Informationen Vorgaben für die Rufweiterleitung zu machen.

Für eine strukturierte und zielgerichtete Bearbeitung bei der Auswahl einer geeigneten Weiterleitung des Anrufs wird dem Anrufer vorteilhafterweise zunächst eine Anzahl von Kriterien oder Kategorien angeboten, aus denen in der Art einer Selektion eine ausgewählt werden kann. Bei diesen Kriterien oder Kategorien kann es sich beispielsweise um Informationen zur sachlichen Kompetenz des jeweiligen Teilnehmers, um organisationsbezogene Informationen, wie beispielsweise die Angabe einer internen Abteilungsbezeichnung, oder auch um Ortsangaben, wie beispielsweise Standorte, Raumangaben innerhalb eines Gebäudes oder Etagenangaben, handeln. Dabei kann beispielsweise auch davon ausgegangen werden, dass aufgrund der Zugehörigkeit des in Frage stehenden Teilnehmers zur selben Abteilung oder Organisationsstruktur des ursprünglich angerufenen Teilnehmers oder auch aufgrund der räumlichen Nähe des Arbeitsplatzes des in Frage stehenden Teilnehmers zum Arbeitsplatz des ursprünglich angerufenen Teilnehmers ein Rückschluss darauf getroffen werden kann, dass dementsprechend auch eine ähnliche Sachkompetenz der jeweiligen Teilnehmer vorliegt. Alternativ oder zusätzlich kann beispielsweise auch der Rückschluss gezogen werden, dass aufgrund enger räumlicher Nähe der Arbeitsplätze der Teilnehmer zueinander möglicherweise derjenige Teilnehmer, zu dem der Anruf weitergeleitet wird, genauere Angaben zur zukünftigen Erreichbarkeit des ursprünglich angerufenen Teilnehmers machen kann.

Um die Auswahl des dritten Kommunikationsgeräts mit vergleichsweise gering gehaltenem Aufwand besonders wirkungsvoll gestalten zu können, wird in technischer Hinsicht zum Kommunikationsaustausch mit dem Anrufer vorteilhafterweise auf geeignete Kommunikationsmittel zurückgegriffen. In besonders vorteilhafter Ausgestaltung wird die Auswahl dabei bildschirmgeführt, vorzugsweise in der Art einer Menüauswahl über eine zugeordnete Computereinheit, wobei als Grundlage zur Auswahl des dritten Kommunikationsgeräts vorteilhafterweise eine Bildschirminformation an das erste Telekommunikationsgerät übermittelt wird. Alternativ oder zusätzlich kann zur Unterstützung der Kommunikation mit dem Anrufer auch ein sprachgeführter Datenaustausch erfolgen, wobei vorteilhafterweise zur Auswahl des dritten Telekommunikationsgerätes eine Anzahl von Sprachmitteilungen an das erste Telekommunikationsgerät übermittelt wird.

Gerade unter Rückgriff auf derartige Kommunikationstechnologien ist eine besonders zielgerichtete Auswahl eines geeigneten dritten Telekommunikationsgeräts für den Anrufer auf besonders einfache Weise ermöglicht, indem die Auswahl des dritten Telekommunikationsgeräts menügeführt vorgenommen wird. Dabei kann dem Anrufer insbesondere zunächst in der Art hierarchisch gestaffelter Kategorien eine Anzahl von Optionen zur Weiterleitung angeboten werden, die sich ausgehend von vergleichsweise allgemein gehaltenen Kategorien hinsichtlich ihrer Detaillierung immer weiter verfeinern, bis schließlich vergleichsweise konkret eingrenzbare Arbeitsplätze oder Personen direkt zur Auswahl angeboten werden.

Bezüglich der Telekommunikationsanlage mit einer Anzahl von an eine zentrale Vermittlungseinrichtung angeschlossenen Telekommunikationsgeräten wird die angegebene Aufgabe gelöst, indem die Vermittlungseinrichtung eine zur Durchführung des genannten Verfahrens ausgestaltete Vermittlungsschnittstelle für eingehende Verbindungswünsche aufweist. Über diese Vermittlungsschnittstelle werden vorteilhafterweise sämtliche eingehenden Anrufe, sowohl von extern als auch von intern, also von Teilnehmern innerhalb der Telekommunikationsanlage, abgewickelt. Die Vermittlungsschnittstelle ist dabei vorteilhafterweise datenseitig mit einer Zentraldatenbank verbunden, in der kategorieabhängig Kennungen der angeschlossenen Telekommunikationsgeräte hinterlegt sind. Zur anrufergeführten Navigation kann sodann die Vermittlungsschnittstelle derartige Kategorien und damit verknüpfte Einzeldatensätze oder Unterkategorien gezielt aus der Datenbank abfragen und dem Anrufer zur Auswahl zur Verfügung stellen.

Die mit der Erfindung erzielten Vorteile bestehen insbesondere darin, dass durch die durch den Anrufer beeinflussbare Auswahl eines geeigneten Endgeräts, auf das der Anruf weitergeleitet werden soll, den spezifischen Anruferinteressen besonders wirkungsvoll und flexibel bei der Rufweiterleitung Rechnung getragen werden kann. Im Gegensatz zu bekannten Systemen, bei denen die Festlegung und Auswahl des Endgeräts, auf das im Zweifelsfall ein eingehender Anruf weitergeleitet werden soll, ausschließlich vom Nutzer des angerufenen Endgeräts aus erfolgt, ist hierbei bereits beim Vermittlungs- und Verbindungsaufbau des Anrufs eine besonders wirksame Berücksichtigung der Anruferinteressen ermöglicht.

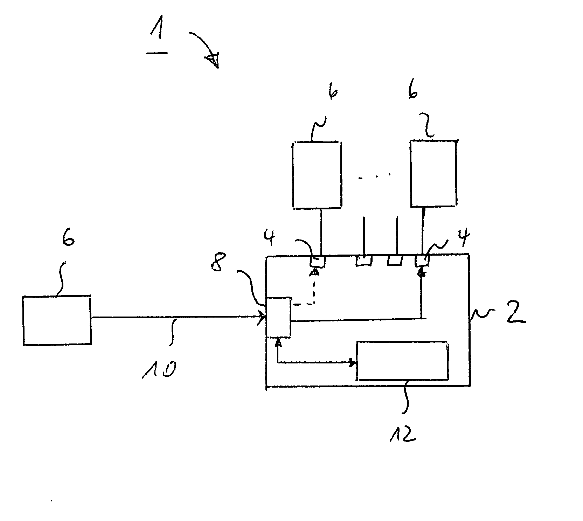

Ein Ausführungsbeispiel der Erfindung wird anhand einer Zeichnung näher erläutert. Darin zeigt die Figur schematisch eine Telekommunikationsanlage.

Die Telekommunikationsanlage 1 gemäß der Figur umfasst eine zentrale Vermittlungseinrichtung 2, an die über geeignete Schnittstellen 4 eine Anzahl von Endgeräten oder Telekommunikationsgeräten 6 angeschlossen ist. Bei der Telekommunikationsanlage 1 kann es sich dabei insbesondere um eine Großanlage mit einer Vielzahl von angeschlossenen Telekommunikationsgeräten 6 handeln, wie sie beispielsweise innerhalb einer Behörde, eines großen Unternehmens oder dergleichen zum Einsatz kommen.

Die Vermittlungseinrichtung 2 umfasst unter anderem eine integrierte Vermittlungsschnittstelle 8, auf der sämtliche eingehenden Anrufe, beispielsweise wie in der Figur durch den Pfeil 10 angedeutet, von einem externen Kommunikationsgerät 6 aus oder alternativ auch von den internen Telekommunikationsgeräten 6 aus, auflaufen. Die solchermaßen für eingehende Verbindungswünsche ausgestaltete Vermittlungsschnittstelle 8 ermittelt dabei im Regelfall anhand eingehender charakteristischer Anruferinformationen, insbesondere einer gewählten Zieltelefonnummer, das dem Verbindungswunsch entsprechende Telekommunikationsgerät 6 und stellt die Verbindung zwischen dem anrufenden Telekommunikationsgerät 6 und dem gewünschten Ziel-Telekommunikationsgerät 6 her.

Die Telekommunikationsanlage 1 ist für eine bedarfsweise Rufweiterleitung für den Fall ausgerüstet, dass für einen in der Vermittlungsschnittstelle 8 auflaufenden Verbindungswunsch festgestellt wird, dass das als Ziel gewünschte Telekommunikationsgerät 6 gerade nicht verfügbar ist, beispielsweise weil es gerade besetzt ist, oder auch weil der entsprechende Nutzer sein Endgerät vorübergehend deaktiviert, blockiert oder auf sonstige Weise als nicht verfügbar gekennzeichnet hat. In einem derartigen Fall leitet die Vermittlungsschnittstelle 8 den eingehenden Anruf und den diesbezüglichen Verbindungswunsch an ein anderes der Telekommunikationsgeräte 6 weiter. Die Rufweiterleitung ist dabei in der Telekommunikationsanlage 1 in besonderem Maße dazu ausgelegt, den Interessen des Anrufers im Sinne eines besonders hohen Servicegrades weitgehend Rechnung zu tragen.

Dazu ist bei der Ausgestaltung der Telekomunikationsanlage 1 die Erkenntnis genutzt, dass vielfach ein Anrufer einen Verbindungswunsch zu einem spezifisch ausgewählten Teilnehmer nicht wegen dessen Person, sondern wegen dessen sachlicher Qualifikation, seiner Funktion in der Organisationsstruktur oder dergleichen festgelegt hat. Falls nun ein derartiger gerufener Teilnehmer nicht verfügbar sein sollte, so ist die Telekommunikationsanlage 1 dafür ausgelegt, eine Rufweiterleitung derart einzurichten, dass den ursprünglichen Interessen des Anrufers weitestgehend Rechnung getragen wird. Dazu werden dem Anrufer bei Nichtverfügbarkeit des angerufenen Teilnehmers Auswahlmöglichkeiten angeboten, anhand derer der Anrufer festlegen oder eingrenzen kann, an welches Telekommunikationsgerät 6 der Anruf weitergeleitet werden soll.

In einem derartigen Fall übermittelt die Vermittlungsschnittstelle 8 an das Telekommunikationsgerät 6, von dem aus der Anruf und der Verbindungswunsch eingegangen sind, Informationen darüber, dass der ursprünglich gewünschte Anschluss derzeit nicht verfügbar ist, und bietet Möglichkeiten zur Auswahl bei der Weiterleitung des Verbindungswunsches an. Dabei übermittelt die Vermittlungsschnittstelle 8 zunächst eine Anzahl von Kategorien, von denen der Anrufer eine auswählen kann. Bei diesen Kategorien kann es sich beispielsweise um Abteilungskennzeichen für die jeweiligen Teilnehmer, sonstige Zugehörigkeitsinformationen zu einzelnen Organisationseinheiten, um Ortsangaben im Hinblick auf räumliche Nähe zum ursprünglich angerufenen Teilnehmer, um Informationen bezüglich sachlicher Qualifikation und/oder um sonstige Angaben handeln, die dem Anrufer eine Zuordnung zu bestimmten Kriterien ermöglichen. Anhand dieser Kategorien, die beispielsweise als Bildschirminformation, als Sprachmitteilung oder auch auf sonstige geeignete Weise in der Art einer menügeführten Auswahlliste bereitgestellt werden, kann der Anrufer sodann eine geeignete Auswahl möglicherweise in Frage kommender Gesprächspartner treffen.

Im Anschluss daran kann eine Weiterleitung des Verbindungswunsches auf eine bereits ausgewählte, sachlich zuständige Stelle, wie beispielsweise ein Abteilungssekretariat oder dergleichen, an eine andere geeignete Person, beispielsweise einen Kollegen oder Mitarbeiter des ursprünglich angerufenen Teilnehmers, an dessen Vorgesetzten oder an anderweitig geeignete Teilnehmer erfolgen. In einem möglicherweise nachfolgenden Schritt kann zudem als weitere Option dem Anrufer eine namentliche Liste möglicherweise geeigneter verfügbarer Gesprächsteilnehmer angeboten werden, von denen er zur Lösung seines individuellen Problems eine auswählen kann. In diesem Fall kann von der Vermittlungsschnittstelle 8 aus direkt die Anrufweiterleitung an die ausgewählte Person bzw. an deren Telekommunikationsgerät 6 vorgenommen werden.

Zur geeigneten Bereitstellung der für die Auswahl erforderlichen Informationen weist die zentrale Vermittlungseinrichtung 2 eine integrierte Zentraldatenbank 12 auf, in der die Informationen über die einzelnen Telekommunikationsgeräte 6 und die diesen jeweils zugeordneten Nutzer in geeigneter Form und unter Rückgriff auf geeignete Kategorie- oder Kriterienangaben hinterlegt sind.

### Bezugszeichenliste

- 1: Telekommunikationsanlage
- 2: Vermittlungseinrichtung
- 4: Schnittstellen
- 6: Telekommunikationsgeräte
- 8: Vermittlungsstelle
- 10: Pfeil
- 12: Zentraldatenbank

## Patentansprüche

1. Verfahren zur Weiterleitung eines von einem einem anrufenden Teilnehmer zugeordneten ersten Telekommunikationsgerät (6) ausgehenden Verbindungswunsches von einem zweiten, einem gerufenen aber abwesenden Teilnehmer zugeordneten Telekommunikationsgerät (6) auf ein drittes Telekommunikationsgerät (6), wobei dem anrufenden Teilnehmer eine Möglichkeit zur Auswahl des dritten Telekommunikationsgerätes (6) angeboten wird.

2. Verfahren nach Anspruch 1, bei dem dem anrufenden Teilnehmer zur Auswahl des dritten Telekommunikationsgeräts (6) zunächst eine Anzahl von Kategorien angeboten wird, aus denen der anrufenden Teilnehmer eine auswählen kann.

3. Verfahren nach Anspruch 1 oder 2, bei dem zur Auswahl des dritten Telekommunikationsgerätes (6) eine Bildschirminformation an das erste Telekommunikationsgerät (6) übermittelt wird.

4. Verfahren nach einem der Ansprüche 1 bis 3, bei dem zur Auswahl des dritten Telekommunikationsgerätes (6) eine Bildschirminformation an eine dem ersten Telekommunikationsgerät (6) zugeordnete Computereinheit übermittelt wird.

5. Verfahren nach einem der Ansprüche 1 bis 4, bei dem zur Auswahl des dritten Telekommunikationsgerätes (6) eine Anzahl von Sprachmitteilungen an das erste Telekommunikationsgerät (6) übermittelt wird.

6. Verfahren nach einem der Ansprüche 1 bis 5, bei dem die Auswahl des dritten Telekommunikationsgerätes (6) menügeführt vorgenommen wird.

7. Telekommunikationsanlage (1) mit einer Anzahl von an eine zentrale Vermittlungseinrichtung (2) angeschlossenen Telekommunikationsgeräten (6), deren Vermittlungseinrichtung (2) eine zur Durchführung des Verfahrens nach einem der Ansprüche 1 bis 6 ausgestaltete Vermittlungsschnittstelle (8) für eingehende Verbindungswünsche aufweist.

8. Telekommunikationsanlage (1) nach Anspruch 7, deren Vermittlungsschnittstelle (8) datenseitig mit einer Zentraldatenbank (12) verbunden ist, in der kategorieabhängig Kennungen der angeschlossenen Telekommunikationsgeräte (6) hinterlegt sind.
